# EUROPÄISCHE PATENTSCHRIFT

(11) **EP 1 178 262 B1**
(45) Veröffentlichungstag und Bekanntmachung des Hinweises auf die Patenterteilung: **13.12.2006**
(21) Anmeldenummer: 01115460.6
(22) Anmeldetag: 27.06.2001
(51) Int. Cl.: F23L 11/00

(54) **Rückströmspeere für eine Abgasleitung**
Non return valve for exhaust duct
Clapet anti-retour pour conduite de gaz de combustion

(30) Priorität: 04.08.2000 DE 10037967
(43) Veröffentlichungstag der Anmeldung: 06.02.2002
(73) Patentinhaber: Centrotherm Systemtechnik GmbH, 59929 Brilon (DE)
(72) Erfinder: Hohmann, Thomas, 34431 Marsberg-Meerhof (DE)
(74) Vertreter: Hosbach, Hans Ulrich

(56) Entgegenhaltungen:
- DE-A- 19 818 521
- DE-C- 10 195
- FR-A- 1 389 416
- FR-A- 2 319 848
- US-A- 3 621 874
- US-A- 4 770 160
- US-A- 5 857 904

## Beschreibung

Die Erfindung betrifft eine Rückströmsperre für eine Abgasleitung, mit einem in einem vertikalen Abschnitt der Abgasleitung einbaubaren Rohrkörper und einem innen im Rohrkörper ausgebildeten Ventilsitz für einen Schwebekörper, der durch aufwärts strömendes Abgas von dem Ventilsitz abhebbar ist und mindestens zwei teller- bzw. ringförmig ausgebildete Teilabschnitte aufweist, wobei jeder nächst-größere Teilabschnitt einen Zusatz-Ventilsitz für den nächst-kleineren Teilabschnitt bildet und wobei jeder nächst-kleinere Teilabschnitt und der nächst-größere Teilabschnitt teleskopartig ineinander greifen und miteinander zusammenwirkende Anschläge zum Begrenzen der Abhebebewegung des nächst-kleineren Teilabschnitts aufweisen.

Eine Rückströmsperre der eingangs genannten Art wird in US-A-3,621,874 beschrieben. Bei der Rückströmsperre gemäß dieser Druckschift ist ein kleinerer Teilabschnitt des Schwebekörpers mit einer nach oben gerichteten Hülse versehen, die einen nach unten gerichteten Zapfen eines größeren Teilabschnitts aufnimmt. Eine Rückstromsperre der eingangs genannten Art ist ferner aus der Patentschrift DE 10195 bekannt. Bei der Rückstromsperre gemäß dieser Druckschrift ist jeder der Teilabschnitte des Schwebekörpers mit nach unten ragenden Stegen versehen, die über dem Umfang verteilt und durch einen unteren Ring miteinander verbunden sind.

Der Erfindung liegt die Aufgabe zugrunde, eine einfache, herstellungstechnisch günstige und besonders leistungsfähige Rückströmsperre der eingangs genannten Art zu schaffen.

Zur Lösung dieser Aufgabe ist die Rückströmsperre der eingangs genannten Art erfindungsgemäß dadurch gekennzeichnet, daß jeder nächst-kleinere Teilabschnitt des Schwebekörpers einen zentralen, nach unten gerichteten Ansatz aufweist, der in eine zentrale Hülse des nächst-größeren Teilabschnitts eingreift, wobei die Hülse den nach unten gerichteten Ansatz des letztgenannten Teilabschnitts bildet.

Die Erfindung schafft die Voraussetzung dafür, daß auch Verbrennungsgeräte mit größeren Abgasmengen, wie beispielsweise Brennwertgeräte mit großen Leistungen, an einer Rückströmsperre angeschlossen werden können und dabei je nach Betriebszustand stets eine geeignete Abgasöffnung bereitsteht.

Durch die Anordnung mehrerer Teilabschnitte an einer Rückströmsperre kann das Abgas einer Verbrennungseinrichtung über variable Öffnungsquerschnitte abgeleitet werden.

Wenn sich die Verbrennungseinrichtung im Ruhezustand befindet, nehmen alle Teilabschnitte ihre jeweilige Schließstellung ein und verhindern somit das Rückströmen von Abgasen aus dem stromab gelegenen Teil der Abgasleitung. Beim Anfahren der Verbrennungseinrichtung wird von letzterer ein Abgasstrom produziert, der zu einer Druckerhöhung auf der stromauf liegenden Seite der Rückströmsperre führt und bewirkt, daß ein erster Teilabschnitt abgehoben wird und eine vorbestimmte Durchlaßöffnung freigibt. Mit zunehmendem Abgasdruck wird ein Punkt erreicht, an dem durch weiteres Abheben des ersten Teilabschnitts keine wesentliche Reduzierung des Strömungswiderstandes mehr erzielt werden kann. An diesen Punkt wird nun ein zweiter Teilabschnitt zusätzlich zu dem ersten Teilabschnitt angehoben, der eine weitere Durchlaßöffnung freigibt und bei steigendem Druck ebenfalls zunehmend abgehoben wird. Nun kann der zweite Teilabschnitt ebenfalls solange angehoben werden, bis keine spürbare Reduzierung des Strömungswiderstandes durch Anheben mehr eintritt, worauf im Bedarfsfall ein weiterer Teilabschnitt geöffnet werden kann. Bei variierender Abgasmenge ist es somit durch die Aneinanderreihung von Teilabschnitten möglich, den Gesamtdurchlaßquerschnitt entsprechend der Anzahl der Teilabschnitte in diskreten Schritten anzupassen.

Gegenüber bekannten einstufigen Rückströmsperren ist es somit insbesondere bei Verbrennungseinrichtungen mit großen Abgasströmen möglich, den Öffnungsquerschnitt an kleine Abgasströme, wie sie beispielsweise im Teillastbetrieb auftreten, anzupassen und im Vollastbetrieb zusätzliche Durchtrittsöffnungen für die anfallenden sehr großen Abgasmengen vorzusehen. Die Rückströmsperre arbeitet im Teillastbereich mit entsprechend hoher Empfindlichkeit. Jeder nächst-größere Teilabschnitt begrenzt die Abhebebewegung des nächst-kleineren Teilabschnitts. Hierdurch wird zum einen ein unkontrolliertes Abheben der Teilabschnitte vermieden, und ferner kann für den jeweiligen Teilabschnitt ein maximal zulässiger Abhebeweg vordefiniert werden, der der maximalen Durchtrittsöffnung dieses Teilabschnitts entspricht.

Die Teilabschnitte greifen teleskopartig ineinander und weisen miteinander zusammenwirkende Anschläge auf. Auf diese Weise kann sichergestellt werden, daß eine bestimmte Reihenfolge beim Abheben der Teilabschnitte eingehalten wird, da die äußeren Teilabschnitte nicht abheben können, ohne innenliegende Teilabschnitte mitzubewegen. Ferner dienen die integrierten Anschläge jeweils auch dazu, die Abhebebewegung des nächstfolgenden Teilabschnitts beim Erreichen der Anschlagstellung durch den vorhergehenden Teilabschnitt zu unterstützen oder gegebenenfalls auszulösen, da die vom vorhergehenden Teilabschnitt über den Anschlag auf den nächstfolgenden Teilabschnitt ausgewirkte Kraft in Richtung der Abhebebewegung gerichtet ist.

Nach einem vorteilhaften Merkmal weist jeder nächst-kleinere Teilabschnitt einen nach unten gerichteten Ansatz auf, der in einer Hülse des nächst-größeren Teilabschnitts geführt wird. Diese Hülsen sind mit dem jeweils zugehörigen Teilabschnitt verbunden und bilden gleichzeitig auf ihrer Außenseite den zylinderförmigen Ansatz gegenüber der Hülse des wiederum nächst-größeren Teilabschnitts.

Vorzugsweise ist der größte Teilabschnitt in einer Führung geführt, die von radial nach innen ragenden Stegen des Rohrkörpers gebildet oder getragen wird. Auch hierbei ist es vorteilhaft, die maximale Abhebebewegung des größten Teilabschnitts zu begrenzen, beispielsweise mittels eines Anschlags in Form einer radialen Verdickung am stromaufwärts gelegenen Ende der Hülse.

In einer anderen vorteilhaften Weiterbildung der Erfindung ist der Ansatz des kleinsten Teilabschnitts als nach unten gerichteter Zapfen ausgebildet, und die Hülsen der größeren Teilabschnitte sind jeweils über Stege mit letzteren verbunden.

In einer anderen Weiterbildung der Erfindung ist der Rohrkörper mit einer stromabwärts offenen, umlaufenden Rinne versehen, die radial innen von einer Innenwand begrenzt wird und an die ein durch den Rohrkörper nach außen führender Kondensatablauf angeschlossen ist, wobei die Innenwand den Ventilsitz für den größten Teilabschnitt des Schwebekörpers bildet.

Hierdurch kann in der Abgasleitung anfallendes Kondensat, das insbesondere bei Brennwertgeräten entstehen kann, noch vor dem Rücklauf in den Heizkessel aufgefangen und abgeleitet werden.

Bedingt durch den Säuregehalt des Kondensats ist es zusätzlich von großem Vorteil säurebeständige Kunststoffe sowohl für den Rohrkörper als auch für den Schwebekörper bzw. dessen Teilabschnitte zu verwenden. Hinzu kommt die gute Verarbeitungsfähigkeit von derartigen Kunststoffen, die sich unter relativ geringen Kosten zu beinahe beliebigen Formen verarbeiten lassen.

Im folgenden wird die Erfindung anhand eines in der Zeichnung schematisch dargestellten Ausführungsbeispiels näher erläutert. In der Zeichnung zeigen:
Figur 1 einen Axialschnitt durch eine erfindungsgemäße Rückströmsperre in geschlossenem Zustand.
Figur 2 einen Axialschnitt durch die Rückströmsperre nach Figur 1 in geöffnetem Zustand unter Teillast.
Figur 3 einen Axialschnitt durch die Rückströmsperre nach Figur 1 und 2 in geöffnetem Zustand unter Vollast.

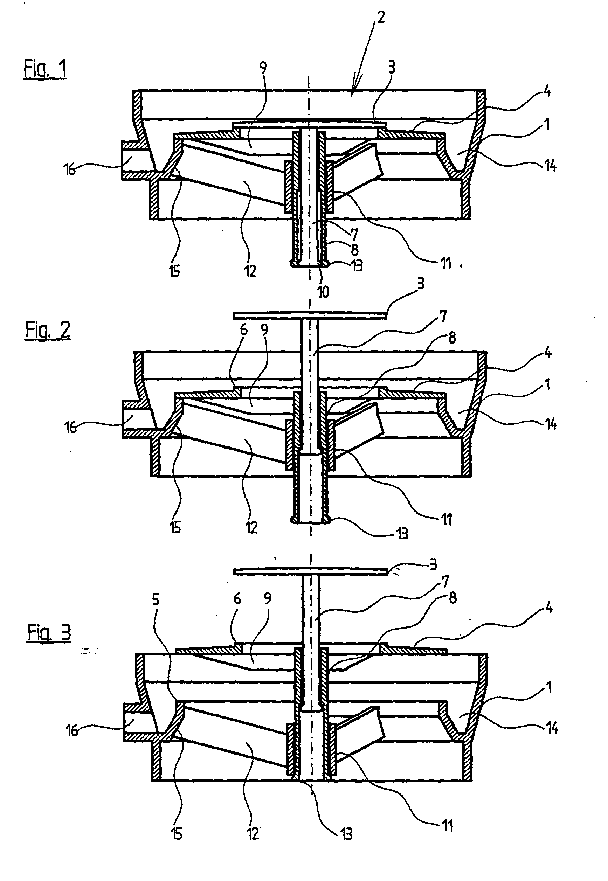

Die Rückströmsperre nach den Figuren 1 bis 3 weist einen Rohrkörper 1 auf, der in einen vertikalen, von unten nach oben durchströmten Abschnitt einer Abgasleitung für eine Verbrennungseinrichtung einbaubar ist. Der Rohrkörper enthält einen Schwebekörper 2, der einen inneren Teilabschnitt 3 und einen nächst-größeren, äußeren Teilabschnitt 4 aufweist.

In der Schließstellung nach Figur 1 und in der Teillast-Stellung nach Figur 2 ruht der äußere Teilabschnitt 4 auf einem Ventilsitz 5 (Figur 3), der innen im Rohrkörper 1 vorgesehen ist. Außerdem bildet der äußere Teilabschnitt 4 einen Zusatz-Ventilsitz 6 (Figur 2 und 3), auf dem der innere Teilabschnitt 3 in der Schließstellung nach Figur 1 aufruht.

In der Schließstellung nach Figur 1 dichtet also die Rückströmsperre die Abgasleitung ab. Wird die zugehörige Verbrennungseinrichtung im Teillast-Bereich betrieben, so hebt der innere Teilabschnitt 3 von seinem Zusatz-Ventilsitz 6 ab und gibt die Abgasleitung partiell frei. Die Position des inneren Teilabschnitts 3 stellt sich auf die abzuführende Abgasmenge ein. Die Rückströmsperre arbeitet im Teillast-Bereich mit hoher Empfindlichkeit. Figur 2 zeigt den maximalen Hub des Teilabschnitts 3.

Steigt die Abgasmenge an, wie es bei Vollast-Betrieb der Verbrennungseinrichtung der Fall ist, so verläßt auch der äußere Teilabschnitt 4 des Schwebekörpers 2 seinen Ventilsitz 5. Figur 3 zeigt den maximalen Durchlaßquerschnitt der Rückströmsperre. Letztere eignet sich also für Verbrennungseinrichtungen hoher Leistung unter gleichzeitiger Beherrschung des Teillast-Bereichs.

Der innere Teilabschnitt 3 des Schwebekörpers 2 trägt einen nach unten, also stromaufwärts gerichteten Ansatz 7, der teleskopartig in einen ebenfalls nach unten gerichteten Ansatz 8 des äußeren Teilabschnitts 4 eingreift. Der Ansatz 8 ist über radiale Stege 9 mit dem äußeren, ringförmigen Teilabschnitt 4 verbunden.

Der hülsenförmige Ansatz 8 bildet in seinem oberen Abschnitt eine Führung für den zapfenförmigen Ansatz 7. Dabei trägt der Ansatz 7 an seinem unteren Ende einen als Verdickung ausgebildeten Anschlag 10, der mit einem komplementären Anschlag im Inneren des Ansatzes 8 zusammenwirkt. Auf diese Weise wird die Aufwärtsbewegung des inneren Teilabschnitts 3 relativ zum äußeren Teilabschnitt 4 begrenzt.

Der hülsenförmige Ansatz 8 des äußeren Teilabschnitts 4 des Schwebekörpers 2 wird seinerseits in einer Führung 11 geführt, die von radial nach innen ragenden Stege 12 des Rohrkörpers 1 getragen wird. Der Ansatz 8 trägt an seinem unteren Ende einen als Verdickung ausgebildeten Anschlag 13, der die Aufwärtsbewegung des äußeren Teilabschnitts 4 relativ zum Rohrkörper 1 begrenzt.

Der Rohrkörper 1 weist eine nach oben, also stromabwärts offene Rinne 14 auf, die radial innen von einer Innenwand 15 begrenzt wird. Letztere bildet den Ventilsitz 5 und trägt außerdem die Stege 12 für die Führung 11. Die Rinne 14 dient zum Auffangen des rücklaufenden Kondensats, wobei letzteres über einen Kondensatablauf 16 abgelassen wird.

Im Rahmen der Erfindung sind zahlreiche Abwandlungen möglich. So kann es beispielsweise sinnvoll sein, neben der gezeigten zweistufigen Ausführung weitere Stufen vorzusehen. Auch könnte die Rückstellung der Teilabschnitte beispielsweise mittels Federkraft oder anderer Einrichtungen unterstützt werden. Außerdem sind neben der beschriebenen kreiszylindrischen Grundform des Rohrabschnittes auch andere Grundformen für den Querschnitt möglich. Ferner besteht die Möglichkeit, den äußeren, ringförmigen Teilabschnitt des Schwebekörpers über seinen hülsenförmigen Ansatz direkt an den Enden der vom Rohrkörper nach innen abstehenden Stege zu führen. Rohrkörper und Schwebekörper des dargestellten Ausführungsbeispiels bestehen aus Kunststoff. Andere Materialien sind ebenfalls verwendbar, wenn auch nicht mit gleich großem Vorteil.

## Patentansprüche

1. Rückstromsperre für eine Abgasleitung einer Verbrennungseinrichtung mit
- einem in einem vertikalen Abschnitt der Abgasleitung einbaubaren Rohrkörper (1) und
- einem innen im Rohrkörper ausgebildeten Ventilsitz (5) für einen Schwebekörper (2), der durch aufwärts strömendes Abgas von dem Ventilsitz (5) abhebbar ist und mindestens zwei teller- bzw. ringförmig ausgebildete Teilabschnitte (3, 4) aufweist, wobei jeder nächst-größere Teilabschnitt (4) einen Zusatz-Ventilsitz (6) für den nächst-kleineren Teilabschnitt (3) bildet und wobei jeder nächst-kleinere Teilabschnitt (3) und der nächst-größere Teilabschnitt (4) teleskopartig ineinander greifen und miteinander zusammenwirkende Anschläge (10, 13) zum Begrenzen der Abhebebewegung des nächst-kleineren Teilabschnitts (3) aufweisen,
**dadurch gekennzeichnet ,**
**daß** jeder nächst-kleinere Teilabschnitt (3) des Schwebekörpers (2) einen zentralen, nach unten gerichteten Ansatz (7) aufweist, der in eine zentrale Hülse des nächst-größeren Teilabschnitts (4) eingreift, wobei die Hülse den nach unten gerichteten Ansatz (8) des letztgenannten Teilabschnitts (4) bildet.

2. Rückströmsperre nach Anspruch 1, **dadurch gekennzeichnet, daß** jeder nächst-kleinere Teilabschnitt (3) des Schwebekörpers (2) im oberen Bereich der Hülse des nächst-größeren Teilabschnitts (4) geführt ist.

3. Rückströmsperre nach Anspruch 2, **dadurch gekennzeichnet, daß** die Hülse des größten Teilabschitts (4) des Schwebekörpers (2) in einer Führung (11) geführt ist, die von radial nach innen ragenden Stegen (12) des Rohrkörpers (1) gebildet oder getragen wird.

4. Rückströmsperre nach Anspruch 3, **dadurch gekennzeichnet, daß** die Führung (11) die Abhebebewegung des größten Teilabschitts (4) des Schwebekörpers (2) begrenzt.

5. Rückströmsperre nach einem der Ansprüche 1 bis 4, **dadurch gekennzeichnet, daß** der nach unten gerichtete Ansatz (7) des kleinsten Teilabschnitts (3) des Schwebekörpers (2) als Zapfen ausgebildet ist und daß die Hülsen der größeren Teilabschnitte (4) jeweils über Stege (9) mit letzteren verbunden sind.

6. Rückströmsperre nach einem der Ansprüche 1 bis 5, **dadurch gekennzeichnet, daß** im Rohrkörper (1) eine stromabwärts offene, umlaufende Rinne (14) ausgebildet ist, die radial innen von einer Innenwand (15) begrenzt wird und einen sich durch den Rohrkörper hindurch nach außen erstreckender Kondensatablauf (16) aufweist, wobei die Innenwand (15) den Ventilsitz (5) für den größten Teilabschnitt (4) des Schwebekörpers (2) bildet.

## Claims

1. A non-return valve for an exhaust-gas line of a combustion device, with
- a tubular body (1), which can be installed in a vertical portion of the exhaust gas line, and
- a valve seat (5), formed inside the tubular body, for a floating body (2), which can be lifted from the valve seat (5) by upward flowing exhaust gas and has at least two sections (3, 4) in the shape of a disc or ring, where each next largest section (4) forms an additional valve seat (6) for the next smaller section (3), and where each next smaller section (3) and the next larger section (4) engage telescopically and have limit stops (10, 13) cooperating with each other to limit the lift movement of the next smaller section (3),
**characterised in that**
each next smaller section (3) of the floating body (2) has a central, downward directed attachment (7) that engages in a central sleeve of the next largest section (4), where the sleeve forms the downwards directed attachment (8) of the latter section (4).

2. A non-return valve according to claim 1, **characterised in that** each next smaller section (3) of the floating body (2) is guided in the upper area of the sleeve of the next larger section (4).

3. A non-return valve according to claim 2, **characterised in that** the sleeve of the largest section (4) of the floating body (2) is guided in a guide (11), which is formed or supported by stays (12) of the tubular body (1) that project radially inward.

4. A non-return valve according to claim 3, **characterised in that** the guide (11) limits the lift movement of the largest section (4) of the floating body (2).

5. A non-return valve according to one of the claims 1 to 4, **characterised in that** the downward directed attachment (7) of the smallest section (3) of the floating body (2) is formed as a pin, and that the sleeves of the larger sections (4) respectively are connected through stays (9) with the latter.

6. A non-return valve according to one of the claims 1 to 5, **characterised in that** inside the tubular body (1), a circumferential channel (14) is formed that is open in the downstream direction, where the radial interior of the channel is limited by a inner wall (15), and has a condensation outlet (16) extending outwards through the tubular body, where the inner wall (15) forms the valve seat (5) for the largest section (4) of the floating body.

## Revendications

1. Clapet anti-retour pour une conduite d'échappement d'un dispositif de combustion, comportant
- un corps tubulaire (1) se montant dans un tronçon vertical de la conduite d'échappement et
- un siège de soupape (5) formé intérieurement dans le corps tubulaire pour un corps flottant (2) qui peut être soulevé du siège de soupape (5) par des fumées montantes et présente au moins deux parties respectivement en forme de disque ou annulaire (3, 4), chaque partie de dimension immédiatement supérieure (4) formant un siège de soupape supplémentaire (6) pour la partie de dimension immédiatement inférieure (3), et chaque partie de dimension immédiatement inférieure (3) et la partie de dimension immédiatement supérieure (4) s'emboîtant télescopiquement et présentant des butées coopérantes (10, 13) pour la limitation du mouvement de soulèvement de la partie de dimension immédiatement inférieure (3),
**caractérisé par le fait**
**que** chaque partie de dimension immédiatement inférieure (3) du corps flottant (2) présente un appendice central (7) dirigé vers le bas qui s'engage dans une douille centrale de la partie de dimension immédiatement supérieure (4), la douille formant l'appendice dirigé vers le bas (8) de la partie citée en dernier (4).

2. Clapet anti-retour selon la revendication 1, **caractérisé par le fait que** chaque partie de dimension immédiatement inférieure (3) du corps flottant (2) est guidée dans la partie supérieure de la douille de la partie de dimension immédiatement supérieure (4).

3. Clapet anti-retour selon la revendication 2, **caractérisé par le fait que** la douille de la partie la plus grande (4) du corps flottant (2) est guidée dans un guidage (11) qui est formé ou porté par des bras (12) s'étendant radialement vers l'intérieur du corps tubulaire (1).

4. Clapet anti-retour selon la revendication 3, **caractérisé par le fait que** le guidage (11) limite le mouvement de soulèvement de la partie la plus grande (4) du corps flottant (2).

5. Clapet anti-retour selon l'une des revendications 1 à 4, **caractérisé par le fait que** l'appendice (7) dirigé vers le bas de la partie la plus petite (3) du corps flottant (2) est formé d'une tige et que les douilles des parties plus grandes (4) sont reliées à cette dernière par des bras (9).

6. Clapet anti-retour selon l'une des revendications 1 à 5, **caractérisé par le fait que** dans le corps tubulaire (1) est formée une rigole périphérique ouverte vers l'aval (14) qui est limitée radialement intérieurement par une paroi intérieure (15) et présente un émissaire de condensat (16) s'étendant vers l'extérieur en traversant le corps tubulaire, la paroi intérieure (15) formant le siège de soupape (5) pour la partie la plus grande (4) du corps flottant (2).
